(19) Europäisches Patentamt
European Patent Office
Office européen des brevets

(11) **EP 3 189 248 B1**

(12) **FASCICULE DE BREVET EUROPEEN**

(45) Date de publication et mention de la délivrance du brevet:
**01.09.2021 Bulletin 2021/35**

(21) Numéro de dépôt: **15760135.2**

(22) Date de dépôt: **02.09.2015**

(51) Int Cl.:
*F16F 15/04* (2006.01)     *F16F 15/067* (2006.01)
*F16F 15/08* (2006.01)     *F16F 3/04* (2006.01)
*F16F 3/093* (2006.01)

(86) Numéro de dépôt international:
**PCT/EP2015/070021**

(87) Numéro de publication internationale:
**WO 2016/034612 (10.03.2016 Gazette 2016/10)**

(54) **DISPOSITIF D'ISOLATION VIBRATOIRE, AMORTISSEUR ASSOCIE ET UTILISATION DUDIT AMORTISSEUR**

SCHWINGUNGSDÄMPFENDE VORRICHTUNG, ZUGEHÖRIGER DÄMPFER UND VERWENDUNG DIESES STOSSDÄMPFERS

VIBRATION INSULATING DEVICE, ASSOCIATED SHOCK ABSORBER AND USE OF SAID SHOCK ABSORBER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.09.2014 FR 1401989**
**16.01.2015 FR 1500089**

(43) Date de publication de la demande:
**12.07.2017 Bulletin 2017/28**

(73) Titulaire: **Thales**
**92400 Courbevoie (FR)**

(72) Inventeurs:
• **CARTE, Gilles**
**F-06156 Cannes La Bocca Cedex (FR)**
• **GIRAULT, Nicolas**
**F-06156 Cannes La Bocca Cedex (FR)**

(74) Mandataire: **Marks & Clerk France**
**Immeuble "Visium"**
**22, avenue Aristide Briand**
**94117 Arcueil Cedex (FR)**

(56) Documents cités:
**EP-A1- 0 466 628     EP-A2- 0 183 197**
**WO-A1-03/100285     FR-A- 980 448**
**US-A- 2 482 488**

**Description**

La présente invention concerne le domaine de l'isolation et de l'amortissement vibratoire. La présente invention concerne plus particulièrement un dispositif d'isolation vibratoire polyvalent, un amortisseur polyvalent et l'utilisation de cet amortisseur. Un tel dispositif d'isolation vibratoire est décrit, par exemple, dans le document US2482488.

L'invention peut trouver son application, par exemple, dans le domaine spatial comme par exemple à bord de satellites.

Certains satellites, comme par exemple les satellites d'observation scientifique, embarquent des instruments sensibles aux micro-vibrations générées par d'autres équipements. Pour assurer la stabilité des instruments lors des observations pour garantir la qualité des mesures ou des images, il peut être nécessaire d'isoler du point de vue vibratoire soit les sources de vibrations extérieures, soit les instruments d'observation. L'isolation vibratoire d'un équipement est généralement obtenue par l'introduction d'éléments souples comme par exemple, des ressorts, des lames élastiques, des plots en élastomère entre l'équipement à isoler et son support dans le satellite. On constitue ainsi une suspension dont le paramètre principal, définissant la performance d'atténuation, est la raideur de ses éléments. Le paramètre de raideur se traduit avantageusement en terme de fréquence de résonance de la suspension. Plus la suspension est souple, plus sa fréquence de résonance $f_0$ est basse et meilleure est l'atténuation des vibrations aux fréquences supérieures à la fréquence propre $f_0$ de la suspension.

Dans certains cas, plutôt que de laisser librement osciller un équipement, il peut être nécessaire d'amortir les vibrations générées par cet équipement par exemple pour éviter de détériorer ledit équipement.

Les dispositifs d'isolation vibratoire sont généralement constitués d'une suspension souple dont les modes propres sont à basses fréquences pour avoir les meilleures performances d'atténuation possibles. Cependant, la souplesse de la suspension ne permet généralement pas à celle-ci de supporter les charges mécaniques de lancement et de qualification au sol. En effet, plus une suspension est souple et plus elle subit de grandes élongations sous fortes charges à basse fréquence ce qui est incompatible avec la tenue mécanique des éléments souples de la suspension et avec les contraintes d'aménagement dans le satellite. Une suspension souple n'est donc généralement pas capable de supporter les charges de lancement ou de qualification au sol. Cette suspension souple doit donc être associée à un dispositif de reprise des charges de qualification et de lancement.

Le dispositif de reprise des charges peut être un élément passif comme un gerbage créant un lien rigide entre la partie suspendue et le support fixe dans le satellite. Ce lien rigide a pour but de reprendre la totalité des charges de qualification et de lancement et une fois le satellite en orbite, il est rompu. Il est donc nécessaire d'avoir un actionneur permettant de rompre ce lien. Le gerbage peut être formé par exemple, d'un système de mâchoires serrées par un tirant métallique et ouvert par un cylindre réalisé dans un matériau à fort coefficient de dilatation qui, lorsqu'il est chauffé, s'allonge fortement et vient étirer dans le domaine plastique et éventuellement jusqu'à rupture le tirant de gerbage. Il est également connu des systèmes à base d'éléments pyrotechniques comme des cisailles ou des boulons pyrotechniques avec une télécommande sol pour activer le déverrouillage de ces derniers.

Cependant, ces solutions présentent de nombreux inconvénients comme un encombrement et une masse importante (éventuellement jusqu'à plusieurs kg par point de gerbage), la nécessité d'une certaine puissance électrique pour le chauffage ou l'activation des charges pyrotechniques, la nécessité d'un système de télécommande au sol s'accompagnant d'une complexité supplémentaire et de contraintes lors des processus d'Assemblage, Intégration et Test ainsi qu'un prix élevé. De plus dans le cas d'une solution à base d'éléments pyrotechniques, le système peut être générateur de chocs. Ces systèmes constituent également un point de panne unique.

Une autre solution consiste à associer à la suspension souple des systèmes de butées en élastomère raides et amortissantes qui limitent le débattement dynamique de l'équipement suspendu et reprennent les charges de lancement. Lorsque les débattements dynamiques de l'équipement sur sa suspension dépassent la valeur du jeu fonctionnel des butées, l'équipement suspendu vient au contact des butées généralement plus raides que la suspension. Cela a pour effet de limiter les débattements dynamiques, de dériver les efforts par les butées et d'épargner les éléments souples de la suspension.

Cette solution est toutefois encombrante et l'aménagement de ces butées dans la plateforme est une source de difficulté. Par exemple, pour une suspension associée à des butées élastiques avec un jeu fonctionnel faible (<1mm), il faut convenablement aligner les différents parties et en particulier les butées pour garantir qu'il n'y aura pas de contact avec les butées une fois en orbite. L'alignement et le réglage au sol pour garantir l'absence de contact avec les butées au cours de la mission orbitale est une contrainte difficile à garantir au niveau des activités d'assemblage.

Il est également connu des solutions actives basées sur la mise en place de liaisons rigides constituées d'éléments actifs entre l'équipement suspendu et le support fixe dans le satellite. Les éléments actifs font appel à des actionneurs électriques pilotés par une boucle de contrôle incorporant des capteurs. Ces actionneurs ont pour but d'annuler les vibrations émises ou reçues par l'équipement suivant que celui-ci est une source de vibration ou un instrument d'observation. Ces éléments actifs peuvent être réalisées par exemple à l'aide de vérins électriques, d'actionneurs piézoélectriques, d'actionneurs électromagnétiques pilotés par une boucle de contrôle (capteurs + électronique de traitement du signal + logiciel de mise en forme de la loi de commande + amplificateur de puissance) destinée à annuler les vibrations de la source par l'application d'effort en opposition de phase. Une chaîne de mesure, de traitement du signal et de génération du signal de pilotage est donc nécessaire.

Il existe également des solutions mixtes associant une suspension raide et amortissante avec un système actif d'annulation des vibrations de la source. Dans ces solutions, la suspension a pour rôle d'atténuer les vibrations à hautes fréquences et le système actif atténue les vibrations à moyenne et basse fréquence.

Ces solutions à base d'éléments actifs ont pour principal défaut d'augmenter la masse du satellite notamment à cause de la masse importante des actionneurs et du boîtier de l'électronique associée. De plus ces solutions augmentent la complexité du système et forment un point de panne unique et nécessitent un haut niveau de fiabilité.

Un but de l'invention est notamment de corriger tout ou partie des inconvénients de l'art antérieur en proposant une solution permettant d'obtenir un isolateur vibratoire souple capable de supporter les charges de lancement sans autre dispositif. Un autre but de l'invention est de proposer une solution permettant d'amortir les vibrations générées par un équipement.

A cet effet, l'invention a pour objet un dispositif d'isolation vibratoire d'au moins un équipement embarqué sur une structure porteuse comprenant une première et une deuxième partie rigide et un groupe d'au moins deux éléments élastiques associés en série, une des deux parties rigides étant destinée à être fixée à l'équipement et une autre partie rigide étant destinée à être fixée à la structure porteuse, chacun des éléments dudit groupe d'éléments élastiques ayant des raideurs différentes, un premier élément étant fixé à la première partie rigide et un deuxième élément étant fixé à la deuxième partie rigide, il existe une plage de valeurs de déformations sur laquelle le premier élément élastique a une raideur croissante avec sa déformation quelle que soit la direction de sollicitation et le deuxième élément élastique a une raideur sensiblement constante en fonction de la déformation appliquée, ladite raideur du premier élément élastique étant inférieure à celle du deuxième élément élastique sur une partie basse de ladite plage de valeurs et supérieure sur une partie haute de ladite plage de valeurs.

Selon un mode de réalisation, les matériaux des éléments élastiques sont des élastomères.

Selon un mode de réalisation, les éléments élastiques sont des ressorts métalliques à enroulements.

Selon un mode de réalisation, les enroulements sont à pas variables.

Selon un mode de réalisation, le premier élément élastique est précontraint.

Selon un mode de réalisation, les éléments élastiques sont reliés entre eux par l'intermédiaire d'une partie rigide intermédiaire.

Selon un mode de réalisation, les parties rigides sont fabriqués dans un matériau choisi parmi un métal, un matériau plastique, un matériau composite ou une combinaison de ces matériaux.

Selon un mode de réalisation, au moins une des parties rigides est fabriquée en plusieurs pièces.

Selon un mode de réalisation, les différentes pièces sont assemblées à l'aide d'un moyen de liaison pris parmi l'emboitement, le collage ou le vissage.

Selon un mode de réalisation, le dispositif est un élément passif.

Selon un mode de réalisation, les éléments élastiques ont une forme sensiblement tronconique.

Selon un mode de réalisation, les éléments élastiques sont fixés sur les parties rigides par un procédé pris parmi le collage ou l'adhérisation.

Selon un mode de réalisation, le dispositif forme un système monobloc.

Selon un mode de réalisation, la première partie rigide comprend deux éléments sensiblement tronconique assemblés tête bêche.

Selon un mode de réalisation, le premier élément élastique comprend au moins une partie sensiblement tronconique.

Selon un mode de réalisation, la première partie rigide comprend deux plateaux montés à chaque extrémité d'une pièce allongée de section inférieure à celle des plateaux.

L'invention a également pour objet un amortisseur vibratoire configuré pour amortir les vibrations d'un équipement comprenant au moins un dispositif d'isolation vibratoire tel que décrit précédemment et une masse résonante, chaque dispositif d'isolation vibratoire étant fixé à la masse résonante.

L'invention a également pour objet l'utilisation de l'amortisseur vibratoire, tel que décrit précédemment, pour amortir les vibrations d'au moins un équipement fixé sur un support dans laquelle chaque dispositif d'isolation vibratoire est fixé entre le support de l'équipement à amortir et ladite masse résonante et dans laquelle l'amortisseur est dimensionné de sorte que sa fréquence de résonance soit inférieure au mode propre du support.

D'autres particularités et avantages de la présente invention apparaîtront plus clairement à la lecture de la description ci-après, donnée à titre illustratif et non limitatif, et faite en référence aux dessins annexés, dans lesquels :

- La figure 1 représente une vue en coupe longitudinale d'un exemple de mode de réalisation d'un dispositif d'isolation vibratoire selon l'invention ;

- La figure 2 représente une vue en coupe longitudinale d'une variante de réalisation d'une partie du dispositif d'isolation vibratoire précédent ;

- La figure 3 illustre des courbes représentatives des raideurs axiales et radiales d'un dispositif d'isolation vibratoire suivant une configuration particulière isoraideur ;

- La figure 4 illustre un exemple de courbes représentatives de la raideur des éléments élastiques et de celui du dispositif d'isolation vibratoire selon l'invention ;

- La figure 5 représente une vue en coupe longitudinale d'un exemple de mode de réalisation d'un dispositif d'isolation vibratoire selon l'invention dans une configuration mono directionnelle ;

- Les figures 6 et 7 représentent des variantes de réalisation du dispositif d'isolation vibratoire selon l'invention.

- La figure 8 illustre un exemple de mode de réalisation d'un amortisseur vibratoire selon l'invention.

Le principe du dispositif d'isolation vibratoire selon l'invention repose sur l'association d'au moins deux éléments élastiques de nature différente permettant d'obtenir des variations de raideur en fonction de la charge mécanique et de borner ces variations en valeur supérieure. De façon avantageuse, l'invention permet d'intégrer dans un même élément mécanique la fonction d'isolation vibratoire des micro vibrations orbitales et la fonction de reprise des charges de qualification et de lancement.

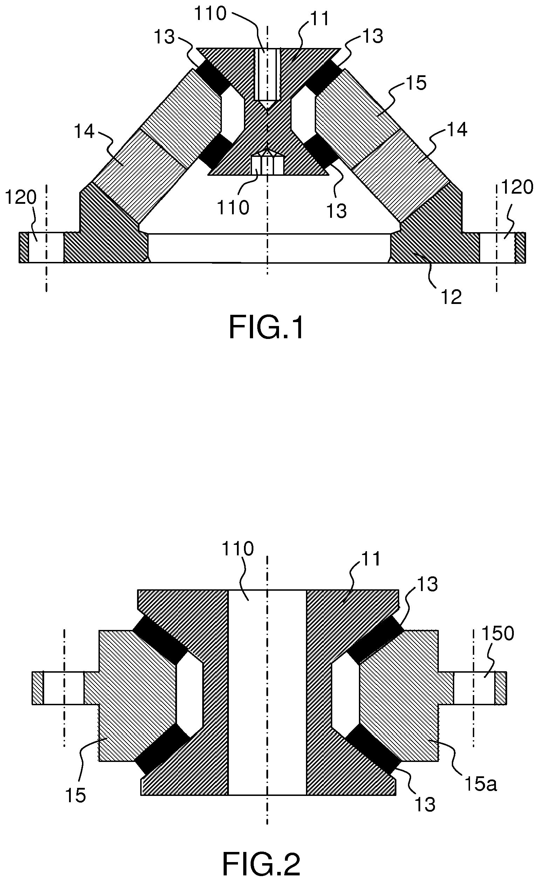

La figure 1 représente une vue en coupe longitudinale d'un exemple de mode de réalisation d'un dispositif d'isolation vibratoire d'au moins un équipement embarqué sur une structure porteuse selon l'invention.

Le dispositif peut comprendre une première partie rigide 11 et une deuxième partie rigide 12. Une des deux parties rigides 11, 12 est destinée à être fixée à l'équipement à isoler et l'autre partie rigide est destinée à être fixée à la structure porteuse. Ces parties rigides 11, 12 peuvent comprendre des trous de fixation 110, 120. Ces trous de fixation peuvent par exemple être débouchants, borgnes, taraudés, lisses ou de toutes autres formes.

A titre d'exemple nullement limitatif, le trou de fixation 110 peut traverser la partie rigide 11. A une extrémité de ce trou de fixation 110 peut se trouver une empreinte femelle, par exemple hexagonale, destinée à immobiliser ladite partie rigide 11 lors du serrage d'une vis de fixation, par exemple de l'équipement, dans le trou de fixation 110 afin de ne pas cisailler élément élastique 13 lors de cette opération de serrage.

Suivant un mode de réalisation, la première partie rigide 11 peut avoir la forme de deux éléments sensiblement tronconiques montés tête bêche l'un sur l'autre ou sur un cylindre, reprenant une forme proche de celle d'un "diabolo". Dans certains modes de réalisation la première partie rigide 11 peut être réalisée en plusieurs pièces afin de faciliter la fabrication du dispositif d'isolation vibratoire selon l'invention.

Le dispositif comprend également au moins deux éléments élastiques 13, 14 de raideur différente associés en série. Suivant un mode de réalisation, les éléments élastiques 13, 14 peuvent être réalisés en élastomère. Suivant un mode de réalisation alternatif, les éléments élastiques 13, 14 peuvent être des ressort métalliques par exemple à enroulement à pas variable.

Un premier élément élastique 13 est fixé à la première partie rigide 11. Cet élément élastique 13 a une raideur croissante avec sa charge quelle que soit la direction de solicitation. Suivant un mode de réalisation, la variation de raideur peut être non linéaire par rapport à la déformation appliquée. La variation de raideur peut être une loi polynomiale d'ordre supérieur ou égal à 2. Dans le cas de ressorts métalliques à enroulement, la non linéarité de la variation de raideur peut être obtenue par la mise en contact des spires entre elles.

Dans l'exemple de réalisation de la figure 1, le premier élément élastique 13 est en deux parties et est formé de deux couronnes sensiblement tronconiques. Cet exemple n'est nullement limitatif et le premier élément élastique 13 pourrait être réalisé en une seule partie, par exemple sous la forme d'un élément recouvrant tout ou partie de la surface de la gorge de la première partie rigide 11 en forme de " diabolo ".

Un deuxième élément 14 est fixé à la deuxième partie rigide 12. Cet élément 14 a une raideur sensiblement constante. Suivant un mode de réalisation, le deuxième élément élastique 14 a une forme sensiblement tronconique.

Le premier élément élastique 13 peut être réalisé dans un matériau souple de façon à filtrer les micro vibrations en orbite tandis que le deuxième élément élastique 14 peut être réalisé dans un matériau de raideur plus élevée pour reprendre les fortes charges au lancement ou lors des essais de qualification au sol.

La valeur de la raideur souhaitée d'un élément élastique 13, 14 et son comportement en fonction de la déformation appliquée peuvent être obtenus par exemple, en modifiant la géométrie de l'élément élastique et/ou en modifiant la composition chimique du ou des matériaux élastiques utilisés et/ou en utilisant plus ou moins de matériau élastique. Dans le cas d'un élément élastique en élastomère, on peut obtenir un élément plus ou moins raide en utilisant une proportion plus ou moins élevée de noir de carbone. Dans le mode de réalisation illustré figure 1, la quantité de matériau élastique du deuxième élément 14 est plus importante que celle du premier élément 13.

Les raideurs des éléments élastiques sont choisies suivant les applications et les types de perturbations à filtrer. De façon connue, la raideur souhaitée pour chaque élément élastique 13, 14 peut être obtenue en fonction de la fréquence propre souhaitée pour la suspension du système et des caractéristiques de l'équipement à isoler comme par exemple sa masse.

A titre d'exemple nullement limitatif, pour un équipement à isoler d'environ 8,5 kg et pour une fréquence propre de la suspension du dispositif d'isolation vibratoire fixée à 12 Hz, la raideur du premier élément élastique 13 pourra être choisie de l'ordre de 48 000 N/m de façon à filtrer efficacement les micro vibrations et la raideur du deuxième élément 14 pourra être choisie de l'ordre de 530 000 N/m de façon à reprendre les charges au lancement avec un mode propre à une fréquence d'environ 40 Hz.

Suivant un mode de réalisation, les éléments élastiques 13, 14 sont reliés ensemble par une partie rigide intermédiaire 15. Cette partie intermédiaire 15 peut être réalisée en une ou plusieurs pièces. De façon avantageuse, la configuration en plusieurs pièces de la partie rigide 11 et de la partie rigide intermédiaire 15 peut faciliter la fabrication des différentes parties du dispositif d'isolation vibratoire. A titre d'exemple, la figure 2 représente une pièce 15a d'une partie rigide intermédiaire 15 réalisée en plusieurs pièces. La liaison des différentes pièces peut être réalisée par exemple par collage, par emboitement serré, par vissage par exemple par l'intermédiaire de trous de fixation 150 réalisés à cet effet ou par tout autre moyen équivalent.

Les éléments élastiques 13, 14 peuvent être fixés sur les parties rigides 11, 12, 15 par exemple par collage ou par adhérisation.

Les parties rigides 11, 12, 15 peuvent être réalisées en métal, dans un matériau composite, dans un matériau thermo plastique, un plastique thermodur ou tout autre type de plastique. Suivant un mode de réalisation, au moins un des éléments rigides 11, 12, 15 peut être réalisé en polyétheréthercétone (ou PEEK).

De façon avantageuse, la forme sensiblement tronconique du premier élément élastique 13 associé à la première partie rigide 11 en "diabolo" est une configuration bien adaptée pour raidir sous charge. Les matériaux élastomères étant incompressibles, une sollicitation en compression conduit à un raidissement rapide. Dans cette configuration, quelle que soit la direction de la sollicitation appliquée au premier élément élastique 13, il existe toujours une zone de matière de l'élément élastique 13 travaillant en compression.

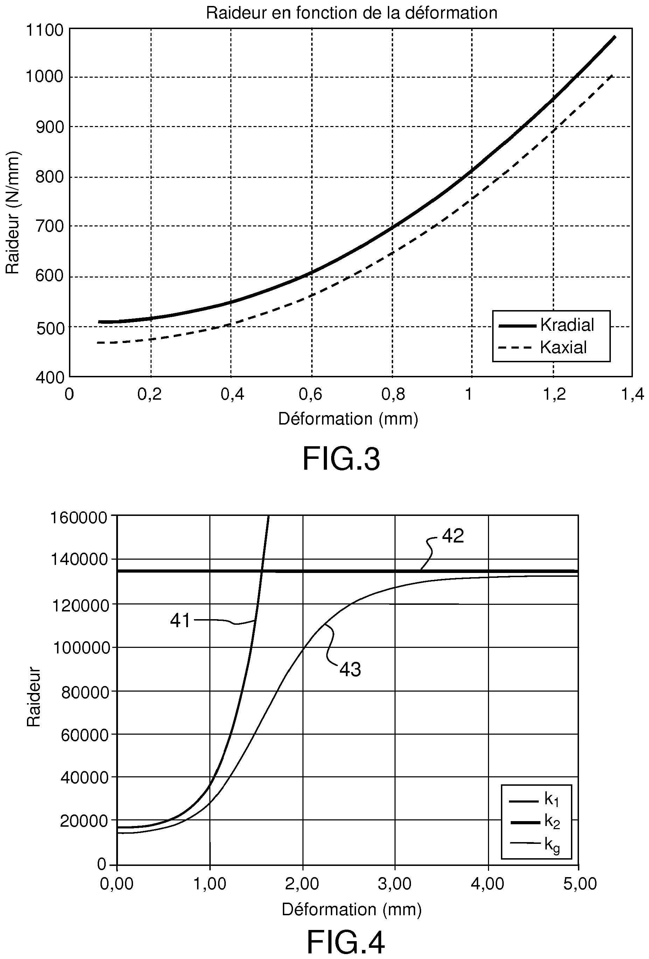

De plus, cette forme permet, en ajustant le paramètre de l'angle des cônes tronqués d'ajuster le rapport entre la raideur axiale et radiale et, dans certaines configurations, d'obtenir un dispositif d'isolation vibratoire ayant la même loi de raidissement dans les directions axiale et radiale du «diabolo» (isoraideur). A titre d'illustration, la figure 3 présente des résultats de raideurs axiale et radiale en fonction de la déformation obtenus avec cette géométrie.

La figure 4 illustre un exemple de courbe représentative de l'évolution des raideurs des premier et deuxième élément élastique 13, 14 ainsi que la raideur résultante de l'association de ces deux éléments en série en fonction de la déformation appliquée.

Il existe une plage de valeurs de déformations sur laquelle la courbe représentative 41 de la raideur du premier élément élastique 13 est croissante et celle 42 du deuxième élément élastique 14 est sensiblement constante.

La courbe représentative 41 de la raideur du premier élément élastique 13 a sensiblement la forme d'un arc de parabole. Comme vu précédemment le premier élément élastique 13 possède une raideur variable. Cette raideur peut, par exemple, être une fonction cubique de la déformation appliquée. Pour de faibles déformations, la raideur est sensiblement constante et faible par rapport à celle du deuxième élément élastique 14 puis augmente fortement.

La courbe représentative 42 de la raideur du deuxième élément 14 est sensiblement une droite de pente nulle. Cet élément élastique 14 possède une raideur sensiblement constante et élevée par rapport à celle du premier élément élastique 13 lors de faibles déformations.

Sur une partie basse de la plage de valeurs de déformations précédemment citée, la raideur du premier élément élastique 13 est inférieure à celle du deuxième élément élastique 14 puis cela s'inverse sur une partie haute de la plage de valeurs. Pour de fortes déformations appliquées, la raideur du premier élément élastique 13 est supérieure à celui du deuxième élément élastique 14.

L'association des deux éléments élastiques 13, 14 en série forme un dispositif d'isolation vibratoire polyvalent à raideur $K_g$ variable, cette dernière évoluant suivant une loi polynomiale. La courbe 43 illustre un exemple d'évolution d'une telle raideur en fonction de la déformation appliquée.

Au repos, ou pour de faibles déformations, la raideur $K_1$ du premier l'élément élastique 13 est petite et la raideur $K_2$ du deuxième l'élément élastique 14 est élevée par rapport à celle du premier l'élément élastique 13. La raideur globale $K_g$ est dans ces conditions très proche de la raideur $K_1$ du premier élément élastique 13.

Au lancement, ou lors des essais de qualification, le dispositif d'isolation vibratoire est comprimé au point que la raideur $K_1$ du premier élément élastique 13 atteint voire dépasse la raideur $K_2$ du deuxième élément élastique 14 qui limite dans ces conditions à sa valeur $K_2$ l'accroissement de la raideur globale $K_g$ de l'ensemble du dispositif d'isolation vibratoire.

L'équation (1) rappelle la formule de la raideur globale $K_g$ dans laquelle $K_1$ et $K_2$ représentent respectivement les raideurs des premier et deuxième éléments élastiques 13, 14.

$$kg = \frac{k1.k2}{k1 + k2} \qquad (1)$$

Il est à noter que la matière des éléments rigides 11, 12, 15 doit être choisie suffisamment dure par rapport à celle des éléments élastiques 13, 14 pour que la raideur globale $K_g$ du dispositif d'isolation vibratoire soit définie par les raideurs des éléments élastiques 13, 14 et non par celles des éléments rigides 11, 12, 15.

Lorsque la raideur $K_1$ devient grande devant $K_2$, la raideur globale $K_g$ tend vers $K_2$. Cette relation démontre que le deuxième élément élastique 14 borne à la valeur $K_2$ l'accroissement de la raideur globale $K_g$ du dispositif ce qui est souhaité lors des essais de qualification et lors de la phase de lancement

Par ailleurs, lorsque la raideur $K_1$ est petite devant la raideur $K_2$, c'est-à-dire lorsque le premier élément élastique 13 est très faiblement chargé, l'équation (1) indique que la raideur globale $K_g$ du dispositif d'isolation vibratoire tend vers $K_1$ ce qui est souhaité en mission orbitale où l'équipement à isoler est soumis à des micro vibrations.

Suivant un mode de réalisation, le premier élément élastique 13 du dispositif d'isolation vibratoire peut être précontraint. De façon avantageuse, cette précontrainte permet d'ajuster la raideur du premier élément élastique 13 pour les micro vibrations. Elle permet de décaler la fréquence du point de fonctionnement du dispositif sous faible charge.

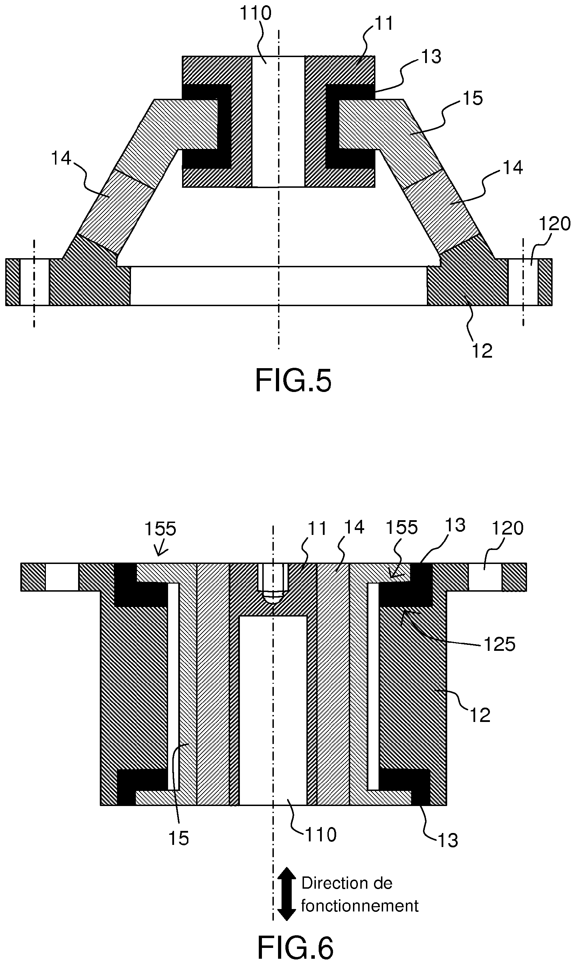

La figure 5 représente un exemple de mode de réalisation d'un dispositif d'isolation vibratoire dans lequel le premier élément rigide 11 à la forme de deux disques montés de part et d'autre d'un élément sensiblement cylindrique rappelant la forme d'une bobine. Comme précédemment, cet élément rigide 11 peut être réalisé en une ou plusieurs parties, par exemple pour des facilités de fabrication, et peut contenir un ou plusieurs trous de fixation 110.

Dans ce mode de réalisation, le premier élément élastique 13 est fixé à l'intérieur de la gorge de la première partie rigide 11 entre une partie intermédiaire 15 et ladite première partie rigide 11. Cet élément a une raideur croissante avec la charge qui lui est appliquée et ceci quelle que soit la direction de sollicitation. Le premier élément élastique 13 peut avoir une variation non linéaire de sa raideur $K_1$.

Comme dans le mode de réalisation précédent, le deuxième élément élastique 14 est fixé entre la deuxième partie rigide 12 et la partie rigide intermédiaire 15. Cet élément élastique 14 a une raideur constante. Suivant un mode de réalisation, le deuxième élément élastique 14 a une forme sensiblement tronconique.

Une fois les différentes parties rigides 11, 12, 15 et les éléments élastiques 13, 14 assemblés ensemble, le dispositif d'isolation vibratoire forme un système monobloc. De façon avantageuse, la forme du premier élément élastique 13 associé à la première partie rigide 11 réalise un assemblage intrinsèquement sûr car même en cas de rupture de cet élément élastique 13, le fait que la première partie rigide 11 et la partie intermédiaire 15 soient emboîtées l'une dans l'autre permet d'empêcher la séparation complète de ces deux parties rigides 11, 15.

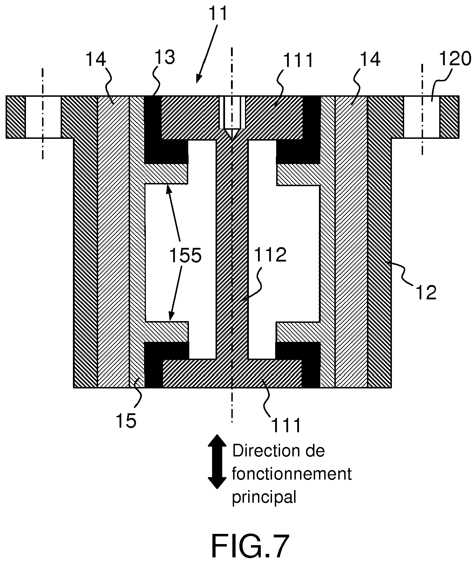

Les figures 6 et 7 présentent des exemples de modes de réalisation dans lesquels le dispositif d'isolation vibratoire ne travaille pas simultanément suivant plusieurs directions comme précédemment mais suivant une seule direction privilégiée. De façon avantageuse, cette configuration unidirectionnelle permet d'obtenir un dispositif plus compact.

Dans le mode de réalisation illustré figure 6, la première partie rigide 11 et la partie intermédiaire 15 peuvent être formées de deux tubes emboîtés l'un dans l'autre qui sont bloqués radialement mais pouvant coulisser longitudinalement. La section des tubes peut avoir différentes géométries comme par exemple et de façon non limitative une forme sensiblement ronde, ovale, carrée, rectangulaire...

La partie intermédiaire 15 présente à ses extrémités deux parties 155 en saillie. La deuxième partie rigide 12, destinée à être fixée sur la structure porteuse, présente à ses extrémités un épaulement 125. Le premier élément élastique 13 a la forme de deux couronnes venant s'intercaler entre les épaulements 125 de la deuxième partie rigide 12 et les parties en saillie 155 de la partie rigide intermédiaire 15. Cet élément élastique 13 travaille en compression et va être soumis au phénomène de raidissement non linéaire.

Un deuxième élément élastique 14 est fixé entre la première partie rigide 11 et la partie rigide intermédiaire 15. Cet élément 14 travaille en essentiellement en cisaillement linéaire et présente une raideur constante.

La figure 7 illustre un mode de réalisation alternatif dans lequel les positions relatives des éléments élastiques 13, 14 sont inversés par rapport au mode de réalisation précédent. Dans ce mode de réalisation, la première partie rigide 11 a une forme rappelant celle d'une bobine. Cette forme n'est pas limitative et peut ne pas avoir une forme de révolution. D'une façon générale, la première partie rigide 11 peut comprendre deux plateaux 111 montés à chaque extrémité d'une pièce allongée 112 de section inférieure à celle des plateaux 111. Les sections transverses des plateaux 111 et de la pièce allongée 112 peuvent avoir différentes géométries comme par exemple une forme sensiblement ronde, ovale, carrée, rectangulaire...

La partie rigide intermédiaire 15 a une forme tubulaire dont la géométrie de la section transversale est sensiblement égale à celle de la première partie rigide 11 afin que cette dernière puisse coulisser à l'intérieur de la partie rigide intermédiaire 15. A l'intérieur de la partie rigide intermédiaire 15 se trouve deux parties saillantes 155. Un premier élément élastique 13 est fixé entre chaque plateau 111 de la première partie rigide 11 et la partie saillante 155 de la partie rigide intermédiaire 15 qui lui fait face.

La deuxième partie rigide 12 a également une forme tubulaire dont la section transversale a une forme sensiblement identique à celle de la partie rigide intermédiaire 15 afin que cette dernière puisse coulisser à l'intérieur de la deuxième pièce rigide 12. Un deuxième élément élastique 14 de raideur constante est fixé entre ces deux parties rigides 12, 15. Cet élément élastique 14 travaille en cisaillement linéaire suivant l'axe de la partie rigide 15.

Plusieurs dispositifs d'isolation vibratoire peuvent être montés sur un même équipement à isoler soit des vibrations extérieures soit des autres équipements afin de répartir les charges et de solliciter les dispositifs d'isolation vibratoire selon le mode pour lequel ils sont conçus.

De façon avantageuse, l'invention permet d'obtenir un dispositif d'isolation vibratoire passif et compact ne nécessitant aucune puissance électrique, ni de télécommande du sol. Le dispositif d'isolation vibratoire selon l'invention permet de conserver les avantages des solutions employant des butées élastiques connues de l'art antérieur à savoir, simplicité, légèreté, protection de l'équipement contre les chocs externes, tout en éliminant les inconvénients liés à ces butées comme le risque de génération de chocs lors de la prise de contact avec les butées, le risque d'abrasion des butées et de relâchement de particules polluantes.

Le dispositif selon l'invention permet de relaxer les contraintes d'alignement lors de l'intégration de l'équipement à isoler par rapport à un dispositif d'isolation faisant appel à des butées.

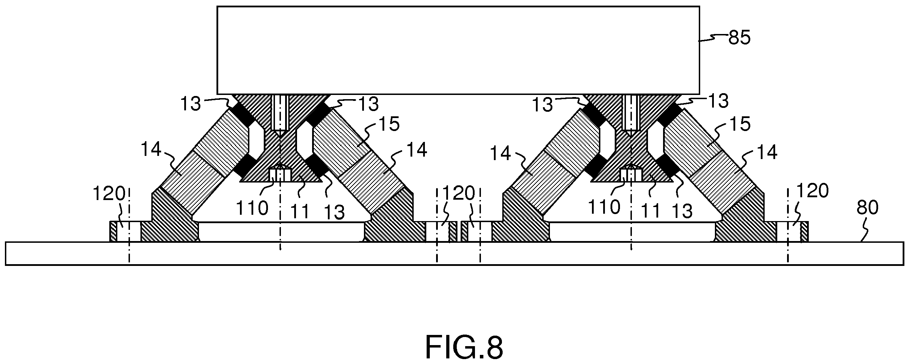

La figure 8 illustre un exemple d'utilisation du dispositif d'isolation vibratoire comme amortisseur vibratoire. L'amortisseur vibratoire, ou résonateur, a pour but d'amortir les vibrations générées par un ou plusieurs équipements fixés sur un support 80. L'amortisseur comprend au moins un dispositif d'isolation vibratoire polyvalent tel que décrit précédemment et au moins une masse résonante 85 ou masse inerte, chaque dispositif d'isolation vibratoire étant fixé à la masse résonante 85.

Suivant un mode de réalisation préférentiel, l'amortisseur comprend trois dispositifs d'isolation vibratoire.

Suivant un mode de réalisation, la masse résonante 85 peut être une plaque d'acier comme par exemple de l'acier inoxydable, un matériau plus dense comme par exemple le tungstène pour réduire le volume de cette dernière ou tout autre type de matériau.

Afin d'amortir les vibrations d'un ou plusieurs équipements fixés sur un support 80, chaque dispositif d'isolation vibratoire de l'amortisseur est fixé entre le support 80 du ou des équipements à amortir et ladite masse résonante 85.

De façon avantageuse, l'amortisseur est placé à un endroit où l'amplitude des oscillations du support 80 de l'équipement à amortir est la plus importante afin que l'excitation de l'amortisseur soit optimale. Cet endroit est généralement situé sensiblement au centre du support 80 de l'équipement générant les vibrations.

L'amortisseur peut être réalisé à l'aide d'un ou plusieurs dispositifs d'isolation vibratoire linéaires ou non linéaires. Suivant le type de dispositif d'isolation vibratoire utilisé, on réalise un amortisseur linéaire ou non linéaire. De façon avantageuse, l'association d'au moins un dispositif d'isolation vibratoire non linéaire avec une masse résonante 85 permet de réaliser un amortisseur non linéaire. Le fait d'ajouter de la non linéarité dans un amortisseur permet de rendre cet amortisseur auto adaptatif.

Dans le cas d'un amortisseur linéaire, pour obtenir un amortissement optimal, et donc dissiper le maximum d'énergie, il faut accorder le résonateur à une fréquence sensiblement égale au mode propre du support 85 de l'équipement à amortir. A cet effet, le coefficient de raideur des éléments élastiques 13, 14 et la masse de la masse résonante 85 doivent être dimensionnés pour sensiblement égaliser les fréquences de résonance de l'amortisseur et du support de l'équipement à amortir. Lorsque le support 80 de l'équipement va osciller, la masse résonante 85 va également se mettre à osciller et va pomper l'énergie mécanique du support 80 pour la dissiper sous forme de chaleur grâce à sa fonction amortisseur.

Un problème avec les amortisseurs linéaires vient du fait que lorsqu'il y a une dérive d'un ou plusieurs paramètres comme par exemple la température, il se peut que le résonateur se désaccorde. Si par exemple la température baisse fortement, les matériaux des éléments élastiques 13, 14 peuvent se raidir et de ce fait, la fréquence du résonateur peut se décaler vers de plus hautes fréquences, l'amortisseur perd ainsi de son efficacité. Si un équipement sensible est monté sur le support 80, on prend le risque que l'amortissement du support 80 soit inférieur à sa valeur optimale et conduise à abimer voire détruire l'équipement sensible. De la même manière, si l'amortisseur passe en surchauffe, les éléments élastiques 13, 14 du dispositif d'amortissement vont voir leur température augmenter et risquer de se ramollir. La fréquence de résonance va donc diminuer et l'amortisseur se désaccorder perdant ainsi son efficacité d'amortissement.

On considère maintenant un amortisseur non linéaire dont la raideur augmente en fonction de la sollicitation. On suppose également que l'amortisseur est dimensionné de sorte que sa fréquence de résonance soit inférieure ou égale à celle du ou des modes propres du support 80. Le coefficient de raideur des éléments élastiques 13, 14 et la masse de la masse résonante 85 sont donc dimensionnés pour que la fréquence de résonance de l'amortisseur soit inférieure aux modes propres du support 80. Lorsqu'un mode du résonateur va commencer à être excité, le résonateur va se raidir et le comportement non linéaire de ce dernier va faire en sorte que la fréquence du résonateur va augmenter au fur et à mesure de l'augmentation de l'amplitude des sollicitations. Ainsi, même si au départ la fréquence de résonance de l'amortisseur n'est pas égale à celle du ou des modes propres du support 80, l'amortisseur va s'accorder sur le ou les modes propres du support. On aboutit ainsi à une auto adaptation de l'amortisseur.

Suivant un mode de réalisation, le premier élément élastique 13 du ou des dispositifs d'isolation vibratoire formant l'amortisseur peut être précontraint. De façon avantageuse, cette précontrainte permet de décaler le point de fonctionnement de l'amortisseur sous faible charge.

## Revendications

1. Dispositif d'isolation vibratoire d'au moins un équipement embarqué sur une structure porteuse **caractérisé en ce qu'**il comprend une première et une deuxième partie rigide (11, 12) et un groupe d'au moins deux éléments élastiques (13, 14) associés en série entre la première et la deuxième partie rigide, une des deux parties rigides (11, 12) étant destinée à être fixée à l'équipement et une autre partie rigide étant destinée à être fixée à la structure porteuse, chacun des éléments dudit groupe d'éléments élastiques (13, 14) ayant des raideurs différentes, un premier élément (13) étant fixé à la première partie rigide (11) et un deuxième élément (14) étant fixé à la deuxième partie rigide (12), et **en ce qu'**il existe une plage de valeurs de déformations sur laquelle le premier élément élastique (13) a une raideur croissante avec sa déformation quelle que soit la direction de sollicitation et le deuxième élément élastique (14) a une raideur sensiblement constante en fonction de la déformation appliquée, ladite raideur du premier élément élastique (13) étant inférieure à celle du deuxième élément élastique (14) sur une partie basse de ladite plage de valeurs de sorte que la raideur globale du dispositif est proche de la raideur du premier élément élastique et supérieure à celle du deuxième élément élastique (14) sur une partie haute de ladite plage de valeurs de sorte que la raideur globale du dispositif est proche de la raideur du deuxième élément élastique.

2. Dispositif selon la revendication précédente selon lequel les matériaux des éléments élastiques (13, 14) sont des élastomères.

3. Dispositif selon la revendication 1 selon lequel les éléments élastiques (13, 14) sont des ressorts métalliques à enroulements.

4. Dispositif selon la revendication précédente selon lequel les enroulements sont à pas variables.

5. Dispositif selon une des revendications précédentes selon lequel le premier élément élastique (13) est précontraint.

6. Dispositif selon une des revendications précédentes selon lequel les éléments élastiques (13, 14) sont reliés entre eux par l'intermédiaire d'une partie rigide intermédiaire (15).

7. Dispositif selon une des revendications précédentes selon lequel les parties rigides (11, 12, 15) sont fabriqués dans un matériau choisi parmi un métal, un matériau plastique, un matériau composite ou une combinaison de ces matériaux.

8. Dispositif selon une des revendications précédentes selon lequel au moins une des parties rigides (11, 12, 15) est fabriquée en plusieurs pièces.

9. Dispositif selon la revendication précédente selon lequel les différentes pièces sont assemblées à l'aide d'un moyen de liaison pris parmi l'emboitement, le collage ou le vissage.

10. Dispositif selon une des revendications précédentes selon lequel le dispositif est un élément passif.

11. Dispositif selon une des revendications précédentes selon lequel les éléments élastiques (13, 14) ont une forme sensiblement tronconique.

12. Dispositif selon une des revendications précédentes selon lequel les éléments élastiques (13, 14) sont fixés sur les parties rigides (11, 12, 15) par un procédé pris parmi le collage ou l'adhérisation.

13. Dispositif selon une des revendications précédentes selon lequel le dispositif forme un système monobloc.

14. Dispositif selon une des revendications précédentes selon lequel la première partie rigide (11) comprend deux éléments sensiblement tronconique assemblés tête bêche.

15. Dispositif selon une des revendications précédentes selon lequel le premier élément élastique (13) comprend au moins une partie sensiblement tronconique.

16. Dispositif selon une des revendications précédentes selon lequel la première partie rigide (11) comprend deux plateaux (111) montés à chaque extrémité d'une pièce allongée (112) de section inférieure à celle des plateaux (111).

17. Amortisseur vibratoire configuré pour amortir les vibrations d'un équipement **caractérisé en ce qu'**il comprend au moins un dispositif d'isolation vibratoire selon une des revendications précédentes et une masse résonante (85), chaque dispositif d'isolation vibratoire étant fixé à la masse résonante (85).

18. Utilisation d'un amortisseur vibratoire, selon la revendication précédente, pour amortir les vibrations d'au moins un équipement fixé sur un support (80) **caractérisée en ce que** chaque dispositif d'isolation vibratoire est fixé entre le support (80) de l'équipement à amortir et ladite masse résonante (85) et **en ce que** l'amortisseur est dimensionné de sorte que sa fréquence de résonance soit inférieure au mode propre du support (80).

**Patentansprüche**

1. Vorrichtung zur Schwingungsisolation mindestens einer auf einer Tragstruktur montierten Anlage, **dadurch gekennzeichnet, dass** sie ein erstes und ein zweites starres Teil (11, 12) und eine Gruppe von mindestens zwei elastischen Elementen (13, 14) umfasst, die in Reihe zwischen dem ersten und dem zweiten starren Teil verbunden sind, wobei eines der beiden starren Teile (11, 12) zum Befestigen an der Anlage bestimmt ist und ein anderes starres Teil (10) zum Befestigen an der Tragstruktur bestimmt ist, wobei jedes der Elemente der Gruppe von elastischen Elementen (13, 14) eine andere Steifigkeit aufweist, wobei ein erstes Element (13) am ersten starren Teil (11) und ein zweites Element (14) am zweiten starren Teil (12) befestigt ist,
und dadurch, dass es einen Bereich von Verformungswerten gibt, über den das erste elastische Element (13) eine unabhängig von der Belastungsrichtung mit seiner Verformung zunehmende Steifigkeit aufweist, und das zweite elastische Element (14) eine im Wesentlichen konstante Steifigkeit in Abhängigkeit von der applizierten Verformung aufweist, wobei die Steifigkeit des ersten elastischen Elements (13) über einen tiefen Teil des Wertebereichs kleiner ist als die des zweiten elastischen Elements (14), so dass die Gesamtsteifigkeit der Vorrichtung nahe der Steifigkeit des ersten elastischen Elements liegt und über einen hohen Teil des Wertebereichs größer ist als die des zweiten elastischen Elements (14), so dass die Gesamtsteifigkeit der Vorrichtung nahe der Steifigkeit des zweiten elastischen Elements liegt.

2. Vorrichtung nach dem vorherigen Anspruch, wobei die Materialien der elastischen Elemente (13, 14) Elastomere sind.

3. Vorrichtung nach Anspruch 1, wobei die elastischen Elemente (13, 14) Metallschraubenfedern sind.

4. Vorrichtung nach dem vorherigen Anspruch, wobei die Windungen variable Steigungen aufweisen.

5. Vorrichtung nach einem der vorherigen Ansprüche, wobei das erste elastische Element (13) vorgespannt ist.

6. Vorrichtung nach einem der vorherigen Ansprüche, wobei die elastischen Elemente (13, 14) durch ein starres Zwischenteil (15) miteinander verbunden sind.

7. Vorrichtung nach einem der vorherigen Ansprüche, wobei die starren Teile (11, 12, 15) aus einem Material ausgewählt aus einem Metall, einem Kunststoff, einem Verbundmaterial und einer Kombination dieser Materialien hergestellt sind.

8. Vorrichtung nach einem der vorherigen Ansprüche, wobei mindestens eines der starren Teile (11, 12, 15) aus mehreren Stücken besteht.

9. Vorrichtung nach dem vorherigen Anspruch, wobei die verschiedenen Stücke mit einem aus Verzahnen, Verkleben oder Verschrauben ausgewählten Verbindungsmittel zusammengefügt werden.

10. Vorrichtung nach einem der vorherigen Ansprüche, wobei die Vorrichtung ein passives Element ist.

11. Vorrichtung nach einem der vorherigen Ansprüche, wobei die elastischen Elemente (13, 14) eine im Wesentlichen kegelstumpfförmige Gestalt aufweisen.

12. Vorrichtung nach einem der vorherigen Ansprüche, wobei die elastischen Elemente (13, 14) an den starren Teilen (11, 12, 15) durch ein Verfahren aus der Gruppe bestehend aus Kleben und Heften befestigt sind.

13. Vorrichtung nach einem der vorherigen Ansprüche, wobei die Vorrichtung ein einteiliges System bildet.

14. Vorrichtung nach einem der vorherigen Ansprüche, wobei das erste starre Teil (11) zwei im Wesentlichen Kopf an Fuß zusammengefügte kegelstumpfförmige Elemente umfasst.

15. Vorrichtung nach einem der vorherigen Ansprüche, wobei das erste elastische Element (13) mindestens ein im Wesentlichen kegelstumpfförmiges Teil umfasst.

16. Vorrichtung nach einem der vorherigen Ansprüche, wobei das erste starre Teil (11) zwei Platten (111) umfasst, die an jedem Ende eines länglichen Teils (112) mit kleinerem Querschnitt als dem der Platten (111) montiert sind.

17. Schwingungsdämpfer, konfiguriert zum Dämpfen der Schwingungen einer Anlage, **dadurch gekennzeichnet, dass** er mindestens eine Schwingungsisolationsvorrichtung nach einem der vorherigen Ansprüche und eine Resonanzmasse (85) umfasst, wobei jede Schwingungsisolationsvorrichtung an der Resonanzmasse (85) befestigt ist.

**18.** Verwenden eines Schwingungsdämpfers nach dem vorherigen Anspruch zum Dämpfen der Schwingungen mindestens einer auf einem Träger (80) befestigten Anlage, **dadurch gekennzeichnet, dass** jede Schwingungsisolationsvorrichtung zwischen dem Träger (80) der zu dämpfenden Anlage und der Resonanzmasse (85) befestigt ist, und dadurch, dass der Dämpfer so dimensioniert ist, dass seine Resonanzfrequenz niedriger als die Eigenmode des Trägers (80) ist.

**Claims**

**1.** A device for vibration isolation of at least one item of equipment on board a support structure, **characterised in that** it comprises a first and a second rigid part (11, 12) and a group of at least two resilient elements (13, 14) connected in series between the first and the second rigid part, wherein one of the two rigid parts (11, 12) is intended to be fixed to the item of equipment and another rigid part is intended to be fixed to the support structure, each of the elements of said group of resilient elements (13, 14) having different stiffnesses, a first element (13) being fixed to the first rigid part (11) and a second element (14) being fixed to the second rigid part (12), and **in that** a range of deformation values exists on which the first resilient element (13) exhibits increasing stiffness with its deformation, irrespective of the direction of stress, and the second resilient element (14) exhibits substantially constant stiffness as a function of the applied deformation, said stiffness of the first resilient element (13) being less than that of the second resilient element (14) on a lower region of said range of values, such that the overall stiffness of the device is close to the stiffness of the first resilient element and is greater than that of the second resilient element (14) on an upper region of said range of values, such that the overall stiffness of the device is close to the stiffness of the second resilient element.

**2.** The device according to the preceding claim, wherein the materials of the resilient elements (13, 14) are elastomers.

**3.** The device according to claim 1, wherein the resilient elements (13, 14) are coiled metal springs.

**4.** The device according to the preceding claim, wherein the coils are variable pitch coils.

**5.** The device according to any of the preceding claims, wherein the first resilient element (13) is prestressed.

**6.** The device according to any of the preceding claims, wherein the resilient elements (13, 14) are connected together by means of an intermediate rigid part (15).

**7.** The device according to any of the preceding claims, wherein the rigid parts (11, 12, 15) are made of a material selected from a metal, a plastic material, a composite material or a combination of these materials.

**8.** The device according to any of the preceding claims, wherein at least one of the rigid parts (11, 12, 15) is made of several parts.

**9.** The device according to the preceding claim, wherein the various parts are assembled using a connection means selected from among interlocking, gluing or screwing.

**10.** The device according to any of the preceding claims, wherein the device is a passive element.

**11.** The device according to any of the preceding claims, wherein the resilient elements (13, 14) have a substantially frustoconical shape.

**12.** The device according to any of the preceding claims, wherein the resilient elements (13, 14) are fixed on the rigid parts (11, 12, 15) using a method selected from among gluing or adhesion.

**13.** The device according to any of the preceding claims, wherein the device forms a one-piece system.

**14.** The device according to any of the preceding claims, wherein the first rigid part (11) comprises two substantially frustoconical elements assembled head-to-tail.

**15.** The device according to any of the preceding claims, wherein the first resilient element (13) comprises at least one substantially frustoconical portion.

**16.** The device according to any of the preceding claims, wherein the first rigid part (11) comprises two plates (111) mounted at each end of an elongated part (112) with a section that is less than that of the plates (111).

**17.** A vibration damper configured to dampen the vibrations of an item of equipment, **characterised in that** it comprises at least one vibration isolation device according to any of the preceding claims and a resonant mass (85), with each vibration isolation device being fixed to the resonant mass (85).

**18.** The use of a vibration damper, according to the preceding claim, for damping the vibrations of at least one item of equipment fixed to a support (80), **char-**

**acterised in that** each vibration isolation device is fixed between the support (80) of the item of equipment to be dampened and said resonant mass (85), and **in that** the damper is dimensioned so that its resonant frequency is less than the normal mode of the support (80).

FIG.1

FIG.2

Raideur en fonction de la déformation

FIG.3

FIG.4

FIG.5

Direction de fonctionnement

FIG.6

Direction de
fonctionnement
principal

FIG.7

FIG.8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2482488 A